# FASCICULE DE BREVET EUROPEEN

(11) **EP 4 469 311 B1**
(45) Date de publication et mention de la délivrance du brevet: **01.07.2026**
(21) Numéro de dépôt: 22847545.5
(22) Date de dépôt: 09.12.2022
(51) Int. Cl.: B60R 21/34

(54) **BUTÉE DE CAPOT À RUPTURE PROGRAMMÉE POUR CHOC PIÉTON**
MOTORHAUBENANSCHLAG MIT PROGRAMMIERTEM BRUCH FÜR FUSSGÄNGERAUFPRALL
BONNET STOP WITH PROGRAMMED BREAK FOR PEDESTRIAN IMPACT

(30) Priorité: 27.01.2022 FR 2200695
(43) Date de publication de la demande: 04.12.2024
(73) Titulaire: Stellantis Auto SAS, 78300 Poissy (FR)
(72) Inventeur: ROYER, Guillaume, 91680 BRUYERES LE CHATEL (FR); PERON, Rodolphe, 95220 HERBLAY (FR); BOUDAN, Julien, 91210 DRAVEIL (FR); GOURVENNEC, Thibault, 91210 DRAVEIL (FR)
(74) Mandataire: BCIP
(86) Numéro de dépôt international: PCT/FR2022/052299
(87) Numéro de publication internationale: WO 2023/144467

(56) Documents cités:
- EP-A1- 1 997 694
- WO-A1-2017/020288
- DE-A1- 102006 032 808
- DE-A1- 102018 208 196
- FR-A1- 2 897 812

## Description

Le domaine technique concerne les faces avant de véhicules présentant au moins une butée de capot ainsi que les véhicules équipés de telles faces avant. En matière de sécurité routière, les constructeurs d'automobiles doivent prendre en compte de multiples préoccupations et réglementations lors du développement de nouveaux véhicules. En particulier, les constructeurs d'automobiles doivent assurer la sécurité des passagers du véhicule en cas de collision. Les comportements des véhicules automobiles dans diverses situations de chocs sont réglementés et testés en mettant en œuvre des procédures de tests normalisées. Les exigences en termes de résultats à ces tests sont toujours plus nombreuses et plus difficiles à satisfaire et obligent les constructeurs d'automobiles à innover constamment. Outre la protection des passagers du véhicule, la protection des autres usagers de la route les plus vulnérables tels que les piétons est un enjeu majeur, puisqu'environ 14 pour cent des accidents mortels de la route en Europe impliquent des piétons. La plupart des accidents impliquant des piétons surviennent à des vitesses modérées. La tête, le bas du corps et les jambes comptent parmi les zones du corps le plus fréquemment blessées. Pour estimer le risque de blessures à la tête lors d'un choc entre un véhicule et un piéton, des tests normalisés, appelés chocs piétons, sont réalisés à 40 km/h à l'aide d'un élément de frappe ayant la forme d'un adulte ou d'une tête d'enfant. Les déformations des zones impactées du véhicule sont ensuite évaluées, ainsi que les contraintes subies par l'élément de frappes, qui sont traduites en blessures potentielles infligées à un piéton. Les procédures normalisées de chocs piétons permettent ainsi d'évaluer la protection offerte par le véhicule vis-à-vis des piétons.

Les constructeurs d'automobiles ont appris que pour minimiser les blessures à la tête lors d'un choc piéton, il est essentiel que l'extrémité avant du capot du véhicule soit en mesure d'absorber une partie de l'énergie du choc en s'effaçant vers le bas pour accompagner le corps et la tête du piéton, puisque la tête du piéton, en particulier, heurte le capot en suivant un mouvement orienté du haut vers le bas. A cet effet, les constructeurs d'automobiles ménagent des butées de capot sur lesquelles l'extrémité avant du capot vient reposer, les butées étant ménagées dans une zone souple et flexible d'une armature de pare-chocs, de sorte à permettre l'affaissement désiré du capot. Outre l'aspect sécuritaire, les butées de capot sont également utilisées pour régler les jeux et les affleurements du capot avec la caisse du véhicule et le pare-chocs.

Une telle solution technique impose que l'extrémité avant du capot soit positionnée suffisamment en retrait des parties plus rigides situées, par exemple, à l'aplomb du groupe moto-ventilateur. Aussi, la mise au point d'une nouvelle silhouette de véhicule présentant un capot dont l'extrémité avant coiffe au moins en partie le groupe moto-ventilateur nécessite de modifier les butées de capot habituelles : en effet, les simulations de chocs piétons montrent que l'armature de pare-chocs, dans sa partie souple habituellement utilisée pour implanter les butées, ne se déforment pas de manière suffisante pour permettre un débattement correct de l'extrémité avant du capot.

Pour essayer de proposer une solution à cette problématique, nous connaissons le document DE 10 2018 208 196 A1 qui décrit un élément tampon pour un capot qui comporte un corps principal, une section de fixation et un point de rupture prédéterminé qui, en cas de dépassement d'une charge limite, se rompt pour permettre un mouvement relatif du corps principal.

L'état de la technique peut aussi être illustré par le document EP 1 997 694 A1, montrant le préambule de la revendication 1, qui décrit un véhicule avec une butée de capot conçue pour s'écraser lors d'un choc piéton. La butée est disposée sur un support derrière la calandre pour amortir l'impact du capot.

Cependant, ces solutions ne sont pas adaptées aux nouvelles silhouettes de véhicules qui présentent un capot dont l'extrémité avant coiffe des parties plus rigides de la structure, comme le groupe moto-ventilateur et il existe un besoin d'une nouvelle solution technique permettant d'améliorer les butées de capot, afin de proposer une nouvelle silhouette de véhicule présentant un tel capot coiffant une partie du groupe moto-ventilateur.

La présente invention a pour objet de pallier les problèmes exposés précédemment.

A cet effet, la présente invention se rapporte à une face avant de véhicule automobile qui est réalisé conformément à l'objet de la revendication 1. L'invention concerne également un véhicule comportant une face avant selon l'invention.

Ainsi, la face avant selon l'invention permet de déplacer la position de la zone de butée vers une zone plus rigide constituée par la zone de recouvrement. En effet, en cas de choc piéton, par construction, l'extrémité avant du capot traverse l'empilement constitué des premier et deuxième éléments. Ainsi, la face avant selon l'invention permet d'obtenir un véhicule selon l'invention présentant une silhouette innovante dans laquelle l'extrémité avant du capot coiffe au moins en partie le groupe moto-ventilateur tout en présentant de bons résultats lors des tests normalisés de chocs piétons.

Selon une variante de l'invention, le premier élément présente un évidement de matière dans chaque zone de butée afin de permettre au capot de venir en butée sur le deuxième élément. Un tel évidement de matière permet à l'extrémité avant du capot de venir directement en contact avec le premier élément. L'évidement permet également de générer une fragilité structurelle dans le premier élément qui, en cas de choc piéton, permet d'obtenir la rupture du premier élément et donc une dissipation accrue d'énergie.

Selon une autre variante de l'invention, le premier élément est un renfort de pare-chocs conçu pour renforcer une peau de pare-chocs.

Selon une variante de l'invention, le deuxième élément est une armature de pare-chocs.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective et de face d'une face avant d'un véhicule selon l'invention ;
[Fig. 2] la figure 2, représente une vue de détails de la figure 1 montrant une zone de butée ;
[Fig. 3] la figure 3, représente une vue en perspective d'un deuxième élément de pare-chocs constitué d'une armature de pare-chocs.

Dans ces figures, les mêmes références sont utilisées pour désigner les mêmes éléments.

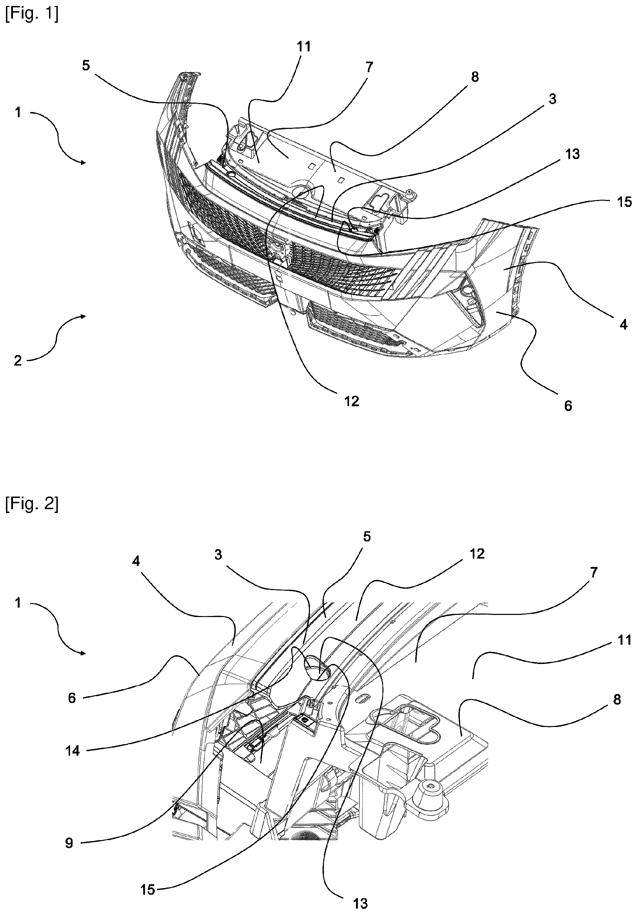

Une face avant 1 selon l'invention, illustrée sur les figures 1 et 2, d'un véhicule 2 automobile selon l'invention comporte un premier élément 3 d'un pare-chocs 4 avant, illustrés sur la figure 1. Dans l'exemple décrit ici, le premier élément 3 est un renfort 5 du pare-chocs 4 conçu pour renforcer une peau 6 du pare-chocs 4, illustrés sur la figure 1.

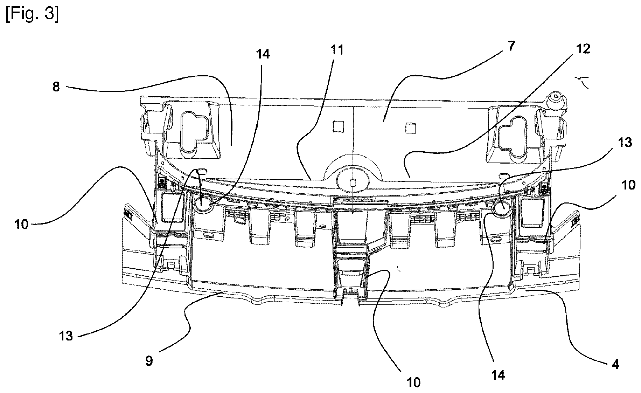

La face avant 1 comporte également un deuxième élément 7 du pare-chocs 4 conçu pour permettre la fixation du premier élément 3 sur la face avant 1. Dans l'exemple illustré sur les figures, le deuxième élément 7 est une armature 8 de pare-chocs. Comme illustrée sur la figure 3, l'armature 8 comporte, par exemple, une poutre 9 de pare-chocs et une pluralité de caissons 10 d'absorption de chocs. L'armature 8 comporte en outre une surface 11, visible sur les figures 1 et 3, sensiblement plane conçue pour s'étendre dans un plan sensiblement horizontal sur la face avant 1 et couvrir une partie du groupe moto-ventilateur, non illustré. La surface 11 présente une souplesse qui croît en direction de l'arrière de la face avant 1 suivant un axe longitudinal.

La face avant 1 présente au moins une zone de recouvrement 12 dans laquelle le premier élément 3 recouvre au moins partiellement le deuxième élément 7, comme illustré sur les figures 1 et 2. Ainsi, le premier élément 3, en l'occurrence le renfort 5 de pare-chocs couvre en partie la surface 11.

La face avant 1 comporte au moins une zone de butée 13 de capot, illustrée sur les figures 2 et 3, conçue pour former une butée en position fermée d'une extrémité avant d'un capot, non illustré sur les figures, de la face avant 1 et conçue pour se rompre en cas de choc piéton subi par la face avant 1 pour permettre au capot de s'affaisser. Chaque zone de butée 13 est ménagée dans la zone de recouvrement 12, la zone de butée 13 étant conçue pour que l'extrémité du capot traverse les premier 3 et deuxième 7 éléments en cas de choc piéton.

A cet effet, chaque zone de butée 13 comporte une zone délimitée par au moins une ligne de rupture 14, illustrée sur les figures 2 et 3, conçue pour rompre en cas de choc piéton. En particulier, la ligne de rupture 14 est ménagée dans le deuxième élément 7, en l'occurrence l'armature 8. Ainsi, en cas de choc piéton subi par la face avant 1, le piéton va percuter le capot et ce dernier, pour accompagner et amortir le choc, va s'affaisser. Le capot exerce alors une pression verticale dirigée vers le bas sur la zone de butée 13 provoquant une rupture au moins partielle de la ligne de rupture 14, ce qui permet au capot de continuer à s'affaisser tout en absorbant une partie de l'énergie du choc piéton. Afin de faciliter la rupture de la zone de butée 13 en cas de choc piéton, le premier élément 3 présente un évidement 15 de matière dans la zone de butée 13 afin de permettre au capot de venir en butée sur le deuxième élément 7, en position fermée. Lors d'un choc piéton, le passage du capot à travers le premier élément 3 provoque des contraintes sur le premier élément 3 qui provoquent sa rupture au départ d'un pourtour de l'évidement 15.

Ainsi, la face avant 1 selon l'invention permet d'obtenir un véhicule 2 selon l'invention dont la silhouette innovante présente une extrémité avant du capot qui couvre au moins partiellement le groupe moto-ventilateur, tout en permettant d'obtenir de bons résultats lors des tests normalisés de chocs piétons. L'invention ne se limite pas au mode de réalisation de la face avant décrit ci-avant, seulement à titre d'exemple, mais d'autres modes de réalisation peuvent être conçus par l'homme de métier sans sortir du cadre de la présente invention tel qu'indiqué dans les revendications suivantes.

## Revendications

1. Face avant (1) de véhicule (2) automobile comportant un premier élément (3) de pare-chocs (4) avant, la face avant (1) comportant également un deuxième élément (7) du pare-chocs (4) conçu pour permettre la fixation du premier élément (3) sur la face avant (1), la face avant (1) présentant au moins une zone de recouvrement (12) dans laquelle le premier élément (3) recouvre au moins partiellement le deuxième élément (7), la face avant (1) comportant au moins une zone de butée (13) de capot conçue pour former une butée en position fermée d'une extrémité avant d'un capot de la face avant (1) et pour se rompre en cas de choc piéton subi par la face avant pour permettre à l'extrémité du capot de s'affaisser, chaque zone de butée (13) étant ménagée dans la zone de recouvrement (12), la zone de butée (13) étant conçue pour que l'extrémité du capot traverse les premier (3) et deuxième (7) éléments en cas de choc piéton, **caractérisée en ce que** chaque zone de butée (13) comporte une zone délimitée par au moins une ligne de rupture (14) conçue pour rompre en cas de choc piéton, la ligne de rupture (14) étant ménagée dans le deuxième élément (7).

2. Face avant (1) selon la revendication 1, **caractérisée en ce que** le premier élément (3) présente un évidement (15) de matière dans chaque zone de butée (13) afin de permettre au capot de venir en butée sur le deuxième élément (7).

3. Face avant (1) selon l'une des revendications 1 ou 2, **caractérisée en ce que** le premier élément (3) est un renfort (5) de pare-chocs conçu pour renforcer une peau (6) de pare-chocs.

4. Face avant (1) selon l'une des revendications 1 à 3, **caractérisée en ce que** le deuxième élément (7) est une armature (8) de pare-chocs.

5. Véhicule (2) comportant au moins une face avant (1) selon l'une des revendications 1 à 4.

## Patentansprüche

1. Vorderseite (1) eines Kraftfahrzeuges (2) mit einem vorderen ersten Stoßfängerelement (3) (4), wobei die Vorderseite (1) ebenfalls ein zweites Stoßfängerelement (7) aufweist, das zur Befestigung des ersten Stoßfängerelements (3) an der Vorderseite (1) ausgebildet ist, wobei die Vorderseite (1) wenigstens einen Überlappungsbereich (12) aufweist, in dem das erste Stoßfängerelement (3) das zweite Stoßfängerelement (7) wenigstens teilweise überdeckt, wobei die Vorderseite (1) wenigstens einen Deckelanschlagbereich (13) aufweist, der zur Bildung eines Anschlags in geschlossener Position eines Vorderendes eines Deckelendes einer Motorhaube ausgebildet ist Vorderseite (1) und zum Brechen im Falle eines Fußgängeraufpralls auf der Vorderseite, um das Einsinken des Endes der Motorhaube zu ermöglichen, wobei jeder Anschlagbereich (13) im Überdeckungsbereich (12) ausgebildet ist, wobei der Anschlagbereich (13) so ausgebildet ist, dass das Ende der Motorhaube das erste (3) und das zweite (7) Element im Falle eines Fußgängeraufpralls durchdringt, **dadurch gekennzeichnet, dass** jeder Anschlagbereich (13) einen Bereich aufweist, der durch mindestens eine Bruchlinie (14) begrenzt ist, die zum Brechen im Falle eines Fußgängeraufpralls ausgebildet ist (14) in dem zweiten Element (7) ausgebildet ist.

2. Vorderseite (1) nach Anspruch 1, **dadurch gekennzeichnet, dass** das erste Element (3) eine Materialausnehmung (15) in jedem Anschlagbereich (13) aufweist, um es der Haube zu ermöglichen, an dem zweiten Element (7) anzuschlagen.

3. Vorderseite (1) nach einem der Ansprüche 1 oder 2, **dadurch gekennzeichnet, dass** das erste Element (3) eine Stoßfängerverstärkung (5) ist, die zur Verstärkung einer Stoßfängerhaut (6) ausgebildet ist.

4. Vorderseite (1) nach einem der Ansprüche 1 bis 3, **dadurch gekennzeichnet, dass** das zweite Element (7) eine Stoßfängerarmierung (8) ist.

5. Fahrzeug (2) mit mindestens einer Vorderseite (1) nach einem der Ansprüche 1 bis 4.

## Claims

1. Front face (1) of a motor vehicle (2) comprising a first item (3) of a front bumper (4), the front face (1) also comprising a second item (7) of the bumper (4) designed to allow the fixing of the first item (3) on the front face (1), the front face (1) having at least one covering zone (12) in which the first item (3) at least partially covers the second item (7), the front face (1) comprising at least one bonnet abutment zone (13) designed to form an abutment in the closed position of a bonnet of the front face (1) and to rupture in the event of a pedestrian impact suffered by the front face to allow the bonnet end to collapse, each abutment zone (13) being formed in the covering zone (12), the stop zone (13) being designed so that the end of the hood passes through the first (3) and second (7) items in the event of a pedestrian impact, wherein each stop zone (13) comprises a zone defined by at least one line break point (14) designed to break in the event of a pedestrian impact, the line break point (14) being arranged in the second item (7).

2. Front face (1) according to claim 1, wherein the first item (3) has a recess (15) of material in each abutment zone (13) in order to allow the cap to come into abutment against the second item (7).

3. Front face (1) according to one of Claims 1 or 2, wherein the first item (3) is a bumper reinforcement (5) designed to reinforce a bumper skin (6).

4. Front face (1) according to one of Claims 1 to 3, **characterised in that** the second item (7) is a bumper reinforcement (8).

5. Vehicle (2) comprising at least one front face (1) according to one of Claims 1 to 4.
